# EUROPEAN PATENT APPLICATION

(11) **EP 2 537 759 A1**
(43) Date of publication of application: **26.12.2012**
(21) Application number: 11744734.2
(22) Date of filing: 18.02.2011
(51) Int. Cl.: B64G 1/64, F16B 2/08

(54) **CONNECTING AND SEPARATING DEVICE, CONNECTING AND SEPARATING SYSTEM, AND CONNECTING AND SEPARATING METHOD**

(30) Priority: 19.02.2010 JP 2010034522
(71) Applicant: Mitsubishi Heavy Industries, Ltd., Tokyo 108-8215 (JP)
(72) Inventor: KOBAYASHI, Mitsuru, Tokyo 108-8215 (JP); SUZUKI, Keiji, Tokyo 108-8215 (JP)
(74) Representative: Intès, Didier Gérard André
(86) International application number: PCT/JP2011/053463
(87) International publication number: WO 2011/102448

(57) **Abstract**

A coupling and separating device is provided which can reduce a separation impact when separating a launch vehicle and a structure. The coupling and separating device is provided with a clamp band 6 which has blocks 3 and a strap 2, and a coupling section 4. The block 3 engages an installation member 20 of the launch vehicle and the structure 20 installed on the installation member 20. The strap 2 maintains the block 3 from outside. The coupling section 4 couples or separates the end sections 2a of the strap 2. The strap 2 is formed of shape memory alloy and is provided with a stretching section 11 which stretches through heating.

## Description

### Technical Field

The present invention is related to a coupling and separating device, a coupling and separating system, and a coupling and separating method. More particularly, the present invention is related to a coupling and separating device, a coupling and separating system and a coupling and separating method, in which a structure is coupled with a launch vehicle and is separated from the launch vehicle.

### Background Art

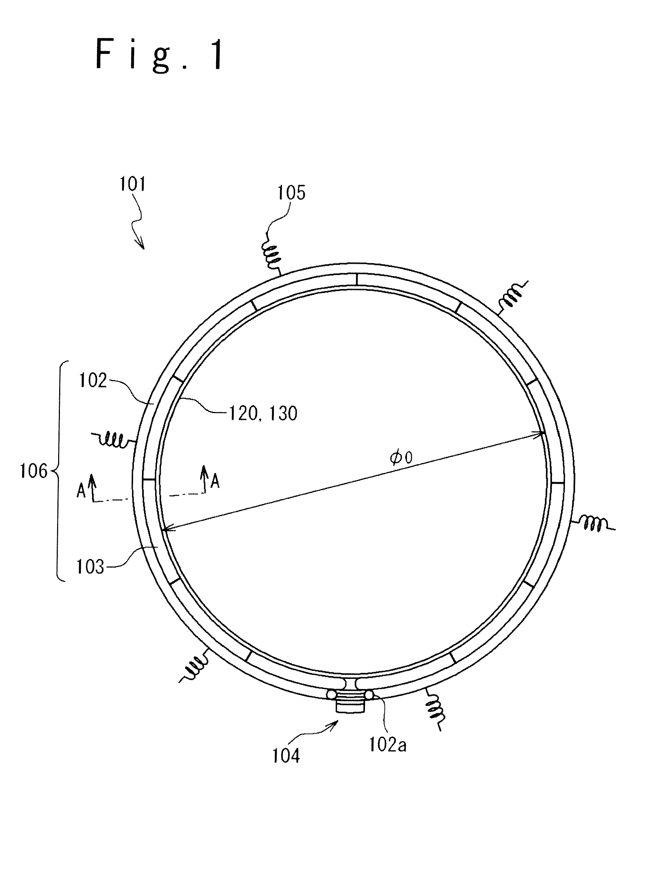

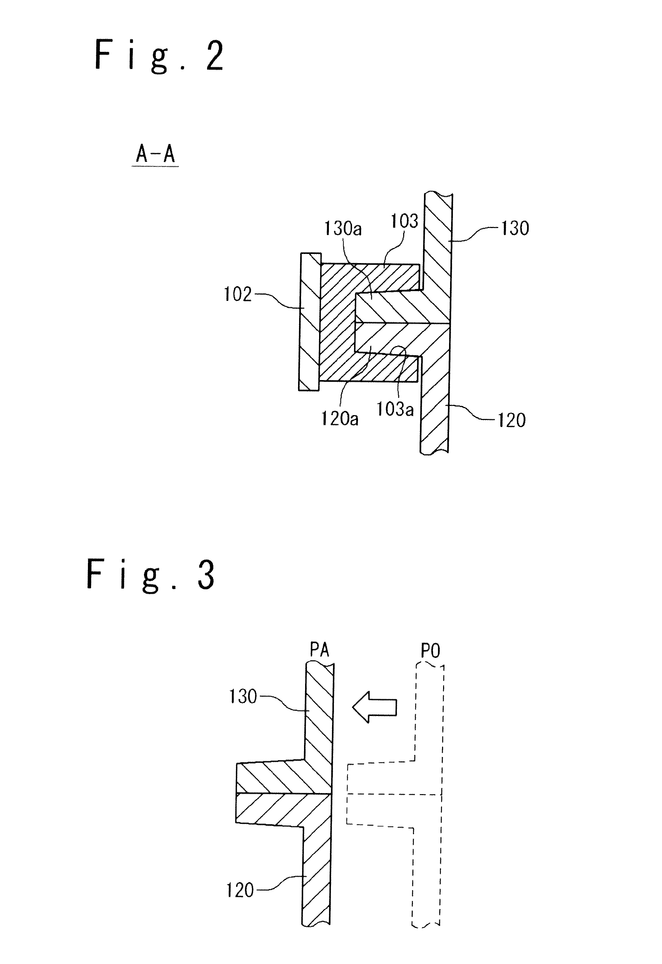

A coupling and separating system is known which couples and separates a launch vehicle (e.g. a rocket) and a structure (e.g. an artificial satellite). In the coupling and separating system of the rocket, the coupling is performed by fastening the coupling of the artificial satellite and the rocket by a clamp band formed of metal. FIG. 1 is a plan view schematically showing the configuration of a general coupling and separating system. FIG. 2 is a sectional view schematically showing the sectional configuration of the coupling and separating system along the line A-A in FIG. 1. The coupling and separating system is provided with a coupling and separating device 101 and a PAF (Payload Attached Fitting) structure 120. The PAF structure 120 is installed in the rocket and is a cylindrical pedestal on which the artificial satellite is installed. The coupling and separating device 101 couples and separates the PAF structure 120 and the satellite side structure 130 installed on the PAF structure 120. However, the satellite side structure 130 is a member having a cylindrical shape on the satellite side. The diameters of the PAF structure 120 and the satellite side structure 130 are almost equal to each other. When both should be coupled, the coupling and separating device 101 fastens the PAF structure 120 and the satellite side structure 130 to shrink them to diameters which are smaller than the original diameters. Thus, the stress is generated in the PAF structure 120 and the satellite side structure 130. The coupling and separating device 101 is provided with a clamp band 106 and a coupling section 104.

The clamp band 106 is provided along the circumference of a fitting portion of the satellite side structure 130 of the PAF structure 120. The clamp band 106 is provided with a plurality of blocks 103 and a strap 102. The plurality of blocks 103 are provided along the circumference of the fitting portion of the satellite side structure 130 of the PAF structure 120. The block 103 has a concave section 103a (e.g. a V-shaped ditch and hereinafter to be also referred to as a V ditch) which engages with the fitting portion of a side edge portion 120a of the PAF structure 120 and a side edge portion 130a of the satellite side structure 130. The PAF structure 120 and the satellite side structure 130 are fit with each other in the concave section 103a by fitting the side edge portion 120a and the side edge portion 130a. The strap 102 is coupled to the surface of each of the plurality of blocks 103 which surface is opposite to the concave section 103a. The plurality of blocks 103 and the strap 102 are made unitary. By fastening the strap 102, the plurality of blocks 103 are pushed into a direction from the surface which is opposite to the concave section 103a to the fitting portion.

The coupling section 104 couples the end sections 102a of the strap 102 and sustains the fastening of the clamp band 106. The coupling section 104 is exemplified by a bolt-like member (not shown) provided for one of the end sections 102a of the strap 102 and a nut-like member (not shown) provided for the other end section 102a. The coupling section 104 couples the end sections 102a of the strap 102 by screwing the bolt-like member into the nut-like member. The force in an outward direction is applied to the clamp band 106 by springs 105 which are attached to the internal body of the rocket outside the structure.

The coupling and separating device 101 releases the coupling of (separates) the satellite and the rocket by using a pyrotechnic. The pyrotechnic moves a cutting jig at high speed in case of the operation of cutting the bolt-like member in the coupling section 104. By the cutting the bolt-like member, the end sections 102a of the strap 102 are separated. Thus, the clamp band 106 is pulled outside at high speed due to the tensile force of the clamp band 106 and the force of the springs 105. As a result, the plurality of blocks 103 also move outside at high speed, and the coupling of the satellite and the rocket is released.

As the related technique, a structure coupling apparatus is disclosed in JP S60-61400A. This structure coupling apparatus transforms shape memory alloy members at a specific temperature to couple structures to each other. The shape memory alloy members return to the shapes before the transformation by heating or cooling a coupling section beyond the martensite transformation temperature from the above specific temperature. Thus, the coupling is released.

Also, a separation mechanism of a space structure is disclosed in Japanese Patent No. 2,671,794. The separation mechanism of this space structure is provided with a bolt, a housing, a separation nut, a shape memory alloy coil, a bolt pushing spring and a spring. The bolt couples a pair of structures. The housing is provided for one of the structures. The separation nut is provided inside this housing and is divided into a direction of radius of a hole screwed with the bolt. The shape memory alloy coil is wound around the external circumference of the separation nut in a coil-shaped manner and each of its end sections is coupled with a heater through the housing. The bolt pushing spring is provided between a bolt tip portion and the housing wall and pushes the bolt to the side of the structure. The spring is provided between the separation nut and the housing wall and pulls the separation nut to the direction of the diameter.

Also, a wire holding and releasing device is disclosed in JP H09-315399a. This wire holding and releasing device is provided with a wire member, a housing, an end member, first and second holding and releasing members and a thermal control section. The wire member positions and holds a space artificial structure to be releasable. One of ends of the wire member is attached to the housing and a pair of balls opposing to each other is provided to freely enter and exit in an almost orthogonal direction to the wire member. The end member is attached to the housing detachably, and is attached to the other end of the wire member, and is put between the balls in the housing to be positioned in the housing. The first and second holding and releasing members are supported by the housing to give force to the balls and are free in heat transformation to position the end member by the balls. The thermal control section controls the temperatures of the first and second holding and releasing members to control the force to the balls, and positions the end member to the housing or cancels the positioning of the end member to release the end member from the housing and controls the holding or releasing operation of the wire member.

Also, a separation mechanism is disclosed in JP H06-32296A. This separation mechanism is installed in a space launch vehicle for an artificial satellite and so on, and constrains an accessory by a wire at the time of launching and releases the constraining state of the accessory by the wire at the time of operation of shifting to the operating state. This separation mechanism is provided with a first shape memory alloy member, a wire stopper, a stopper, a second shape memory alloy member, and first and second heaters. The first shape memory alloy member is interposed in the wire. The wire stopper contains the first shape memory alloy member and holds one end of the wire, the other end of which is fixed. The stopper holds the wire stopper to the restriction condition. The second shape memory alloy member holds the stopper to the restriction condition. The first and second heaters heats and stretch the first and second shape memory alloy members such that the wire is released from the restriction condition so as to secure the operation of the accessory.

### Citation List

- [Patent Literature 1]: JP S60-61400A
- [Patent Literature 2]: JP Patent No. 2,671,794
- [Patent Literature 3]: JP H09-315399A
- [Patent Literature 4]: JP H06-32296A

### Summary of the Invention

In the coupling and separating device 101 shown in FIG. 1 and FIG. 2, when the artificial satellite and the rocket should be separated, the bolt-like member of the coupling section 104 is cut and the clamp band is pulled in an outer direction at high speed with the tensile force of the clamp band 106 and the force of the springs 105. As a result, the force is released which directs into the outer direction from the center of the PAF structure 120 and the satellite side structure 130 which are pressed through the blocks 103 with the fastening force of the clamp band 106. FIG. 3 is a diagram schematically showing the state that the stress of the PAF structure 120 and the satellite side structure 130 is released. FIG. 3 shows the same section as in FIG. 2. The PAF structure 120 and the satellite side structure 130 are in the position P0 in the accumulation condition of the stress in the coupling state. However, after the bolt-like member of the coupling section 104 is cut and the blocks 103 are freed, the PAF structure 120 and the satellite side structure 130 can move freely. Therefore, the PAF structure 120 and the satellite side structure 130 release the stress at very high speed and try to move to the position PA where there is no stress. As a result, the PAF structure 120 and the satellite side structure 130 vibrate intensely with respect to the position PA as a center. That is, the impact is generated to the satellite side structure 130 through the momentary release of the tensile force in addition to the impact by the pyrotechnic. When such a separation impact is larger, it is necessary to make the design condition of the satellite side equipment severe, which causes problems in the cost and the weight.

An object of the present invention is to provide a coupling and separating device, a coupling and separating system, and a coupling and separating method, in which the separation impact can be reduced when a launch vehicle (e.g. a rocket) and a structure (e.g. an artificial satellite) should be separated. Also, another object of the present invention is to provide a coupling and separating device, a coupling and separating system and a coupling and separating method, in which an impact by momentarily releasing the strain energy of the satellite side structure can be reduced when a launch vehicle and a structure should be separated.

These objects of the present invention, the objects and the effects except the above objects can be easily confirmed by the following description and the attached drawings.

The coupling and separating device of the present invention includes a clamp band having blocks and a strap, and a coupling section. The block engages an installation member of a launch vehicle and a structure installed on the installation member. The strap holds the block from outside. The coupling section couples or separates end sections of the strap. The strap is formed of shape memory alloy and comprises a stretching section which stretches through heating.

In the present invention, the strap is provided with a stretching section formed of shape memory alloy to stretch through heating and is made unitary with the blocks. By fastening the installation member and the structure, the installation member and the structure are engaged. When canceling the coupling, the shape memory alloy member is stretched through the heating before the strap is cut, to stretch the strap. Because the strap stretches and loosens and the block moves outside, the installation member and the structure can be moved outside. As a result, a part of the stress (the strain energy) which has been accumulated in the structure by the fastening the strap and the blocks can be released before cutting the strap. Thus, the strain energy which is released when cutting the strap can be further reduced, compared with a case of cutting the strap at a moment. As a result, the separation impact in cutting of the strap can be reduced.

In the above-mentioned coupling and separating device, it is desirable that the strap is provided with a plurality of stretching sections.

In this case, the present invention has the plurality of stretching sections (the plurality of shape memory alloy members) which stretch through the heating. If the plurality of stretching sections are stretched one by one, a part of the stress (the strain energy) which has been accumulated in the structure can be released in a step-by-step manner before separating the strap. Thus, when separating the strap, the strain energy can be more gently released, compared with a case of cutting the strap at a moment. As a result, the separation impact in separating of the strap can be more reduced.

In the above-mentioned coupling and separating device, it is desirable that the shape memory alloy member contains TiNi.

It is desirable that TiNi excellent in strength as the shape memory alloy is used for the stretching section because the coupling and separating device is required to endure the fastening force of the strap in the present invention.

In the above-mentioned coupling and separating device, it is desirable that the end sections of the strap have openings, respectively. It is desirable that the coupling section is provided with a pin and a driving unit which inserts and pulls out the pin into and from the openings. It is desirable that the coupling section couples the end sections of the strap by inserting the pin into the openings. It is desirable that the coupling section separates the end sections of the strap by pulling out the pin from the openings.

In this case, in the present invention, because the coupling section performs the coupling and separation by inserting and pulling out the pin, the separation impact when separating the end sections of the strap can be further reduced, compared with a case of using a pyrotechnic.

It is desirable that a heating section is further provided to heat the stretching section in the above-mentioned coupling and separating device.

In this case, in the present invention, because the heating section is provided for the heating, it is not necessary to provide a heating unit on the side of the launch vehicle.

It is desirable that the coupling and separating system of the present invention is provided with an installation member, a coupling and separating device and a heating unit. It is desirable that the installation member is installed in the launch vehicle and a structure is installed in the installation member. The coupling and separating device couples and separates the installation member and the structure and is described in the above. It is desirable that the heating unit heats the stretching section of the coupling and separating device.

In the present invention, because the coupling and separating system described in the above has the coupling and separating device, it is possible to reduce the separation impact in the separation of the end sections of the strap.

It is desirable that the above coupling and separating system is further provided with a first sensor which detects the temperature of the stretching section. It is desirable that the heating system stops the heating based on the detection result of the first sensor.

In this case, in the present invention, the stop of the heating unit is determined based on the temperature of the shape memory alloy member detected by the first sensor. Therefore, after confirming that the temperature reaches a temperature above the shape recovery temperature of the shape memory alloy in the stretching section, the heating unit can be stopped. Thus, the shape memory alloy can be surely stretched to the previously memorized length. As the first sensor, a resistance thermometer and thermocouple are exemplified.

It is desirable that the above coupling and separating system is further provided with a second sensor which detects the length of the stretching section. It is desirable that the heating unit stops the heating based on the detection result of the second sensor.

In this case, in the present invention, based on the length of the shape memory alloy detected by the second sensor, the stop of the heating unit is determined. Therefore, after confirming that the shape memory alloy in the stretching section has stretched to the previously memorized length, the heating unit can be stopped. Thus, the shape memory alloy member can be surely stretched to the previously memorized length. As the second sensor, a strain sensor is exemplified.

A coupling and separating method of the present invention uses a coupling and separating system which couples or separates a structure to or from a launch vehicle. The coupling and separating system includes: an installation member which is installed in the launch vehicle and in which the structure is installed; a coupling and separating device which couples or separates the structure with or from the installation member; and a heating unit. The coupling and separating device includes: a block which engages the installation member of the launch vehicle and the structure installed in the installation member; a strap which holds the block from outside; and a coupling section which couples or separates end sections of the strap. The strap is formed of shape memory alloy and includes a stretching section which stretches through heating. The coupling and separating method includes: heating the stretching section of the strap by the heating unit to stretch the stretching section, and separating the coupled end sections in the coupling section after the stretch.

In the present invention, the strap is provided with the stretching section formed of the shape memory alloy stretching through heating and is made unitary with the blocks. By fastening the installation member and the structure, the installation member and the structure are engaged and coupled. When canceling the coupling, the shape memory alloy is stretched through the heating before the strap is separated, and thus the strap is stretched. The installation member and the structure can be moved because the strap is stretched and loosened and the blocks move outside. As a result, a part of the stress (the strain energy) accumulated in the structure by the fastening the block can be released before separating the strap. Thus, the strain energy is released when separating the strap can be further reduced, compared with a case of cutting the strap at a moment. As a result, the separation impact in separation of the strap can be reduced.

In the above-mentioned coupling and separating method, it is desirable that the strap is provided with the plurality of stretching sections which contain the stretching section. It is desirable that the heating step includes heating the plurality of stretching sections at different timings by the heating unit.

In this case, the present invention has the plurality of stretching sections (plurality of shape memory alloys) to be stretched through the heating. A part of the stress (the strain energy) accumulated in the structure before separating the end sections of the strap can be released in a step-by-step manner by stretching the stretching sections one by one. Thus, when separating the strap, the strain energy can be more gently released, compared with a case of cutting the strap at a moment. As a result, the separation impact in separation of the end sections of the strap can be further reduced.

In the above-mentioned coupling and separating method, it is desirable that the heating of the plurality of stretching sections one by one by the heating unit includes heating one of the plurality of stretching sections by the heating unit; and after ending the heating, heating one stretch section of the plurality of stretching sections which is not yet heated.

In the present invention, in this case, because the next stretching section is heated after ending the heating of the shape memory alloy in one stretching section, the energy necessary for the heating can be restrained. It should be noted that there is not a problem because the shape is maintained even if the heating is stopped if the shape memory alloy once recovers the shape.

According to the present invention, the separation impact can be reduced when the launch vehicle and the structure are separated. Also, the impact when the strain energy of the satellite side structure is momentarily released can be reduced when the coupling is cancelled.

### Brief Description of the Drawings

FIG. 1 is a plan view schematically showing a configuration of a conventional coupling and separating system;
FIG. 2 is a sectional view schematically showing the configuration of the conventional coupling and separating system;
FIG. 3 is a sectional view schematically showing a state when stress of a PAF structure and a satellite side structure is released;
FIG. 4 is a plan view schematically showing the configuration of the coupling and separating system according to an embodiment of the present invention;
FIG. 5 is a sectional view schematically showing the configuration of the coupling and separating system along the line A-A of FIG. 4;
FIG. 6 is a plan view schematically showing configuration of the coupling section in FIG. 4;
FIG. 7 is a flow chart showing an operation of the coupling and separating system according to the embodiment of the present invention;
FIG. 8A is a sectional view schematically showing the coupling and separating system along the line A-A of FIG. 4 at step S01 of FIG. 7;
FIG. 8B is a sectional view schematically showing the coupling and separating system along the line A-A of FIG. 4 at step S02 of FIG. 7;
FIG. 8C is a sectional view schematically showing the coupling and separating system along the line A-A of FIG. 4 at step S03 of FIG. 7;
FIG. 8D is a sectional view schematically showing the coupling and separating system along the line A-A of FIG. 4 at step S04 of FIG. 7; and
FIG. 9 is a graph showing an example of the tensile stress of the clamp band at each step of FIG. 7.

### Description of the Embodiments

Hereinafter, a coupling and separating device, a coupling and separating system and a coupling and separating method according to the present invention will be described with reference to the attached drawings. Here, an example will be described that a launch vehicle in which a coupling and separating system is installed is a rocket, and a structure which is coupled to and is separated from the launch vehicle is an artificial satellite.

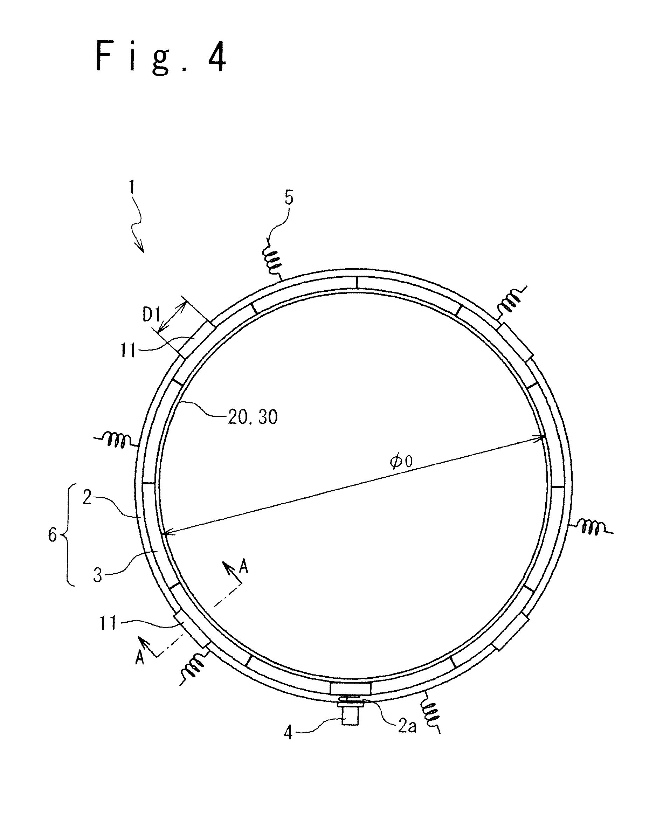

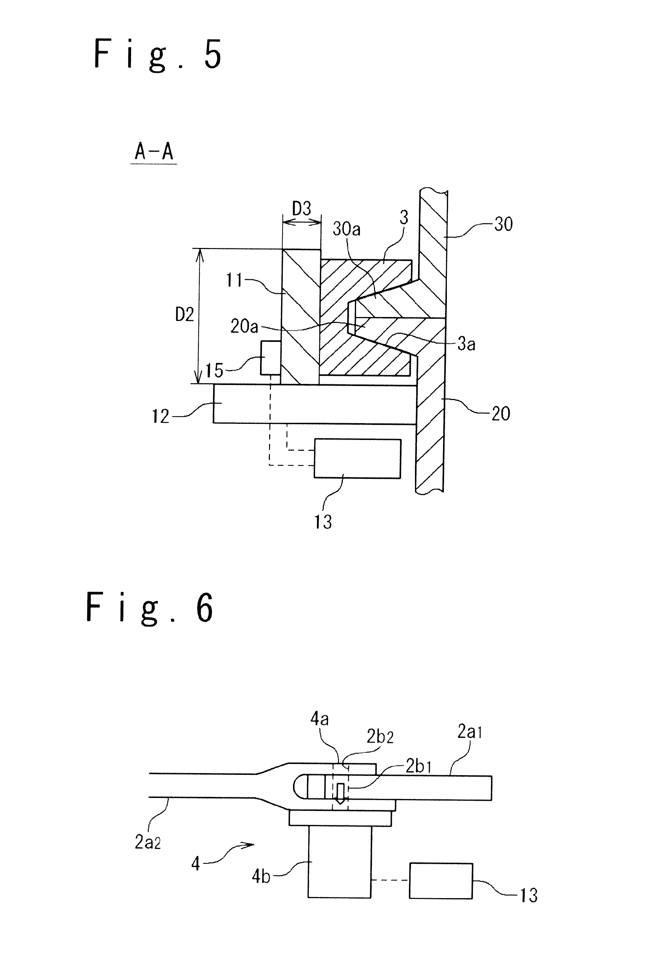

The configuration of the coupling and separating device and the coupling and separating system according to an embodiment of the present invention will be described. FIG. 4 is a plan view schematically showing the configuration of the coupling and separating system according to the embodiment of the present invention. FIG. 5 is a sectional view schematically showing the sectional configuration of the system along the line A-A in FIG. 4. The coupling and separating system is provided with a coupling and separating device 1, a PAF (Payload Attached Fitting) structure 20 and a heater (a heating unit) 12.

The PAF structure 20 (installation member) is a cylindrical pedestal which is installed in the rocket, and on which the satellite is installed. The coupling and separating device 1 couples and separates the PAF structure 20 and the satellite side structure 30 which is installed on the PAF structure 20. However, the satellite side structure 30 is a member having a cylindrical shape on the side of satellite. The diameters of the PAF structure 20 and the satellite side structure 30 are almost equal to each other. When both are fit, they are fastened by the coupling and separating device 1 to shrink the diameters of them which are smaller than the original diameters. Thus, stress occurs in the PAF structure 20 and the satellite side structure 30. The heater 12 heats a shape memory alloy element 11 of the coupling and separating device 1 to be described later, to a temperature above a shape recovery temperature (martensite transformation temperature). The coupling and separating device 1 is provided with a clamp band 6 and a coupling section 4.

The clamp band 6 is provided along the circumference of a fitting portion of the satellite side structure 30 and the PAF structure 20. By fastening the clamp band 6, the satellite side structure 30 and the PAF structure 20 are transformed to shrink. That is, the satellite side structure 30 and the PAF structure 20 receive the stress (the strain energy) which accompanies the transformation at the time of engagement. The clamp band 6 is provided with a plurality of blocks 3 and a strap 2.

The plurality of blocks 3 are provided along the circumference of the fitting portion of the satellite side structure 30 and the PAF structure 20. The block 3 has a concave section 3a which engages with the fitting portion of the side edge portion 20a of the PAF structure 20 and the side edge portion 30a of the satellite side structure 30. The concave section 3a has an almost V-shaped ditch. The side edge portion 20a of the PAF structure 20 and the side edge portion 30a of the satellite side structure 30 are fit to form a convex section of a mountain shape and engage with the concave section 3a. For example, the block 3 is formed of steel.

The strap 2 has an annular shape in which end sections 2a are coupled by the coupling section 4. The strap 2 is coupled to the surfaces of the blocks which are on the side opposite to the concave section 3a of the plurality of blocks 3. The plurality of blocks 3 and the strap 2 are made unitary. By fastening the strap 2, the plurality of blocks 3 are pushed in a direction from the side of the surfaces of the blocks which is opposite to the concave section 3a, to the side of the fitting portion.

By the fastening force which directs to the center of the PAF structure 20 and the satellite structure 30, the plurality of blocks 3 are pushed to the center direction. The forces of the PAF structure 20 and the satellite side structure 30 which direct in a direction from the center to the outside are suppressed with the fastening force in the concave section 3a. Through a balance of the fastening force and the stress in the PAF structure 20 and the satellite side structure 130, the engagement of the PAF structure 20 and the satellite side structure 30 and the clamp band 6 can be sustained. The force in the outward direction is applied to the clamp band 6 by springs 5 which are attached to the main body of the rocket (not illustrated).

Here, at least one portion of the annular shape of the strap 2 formed of steel is made from the shape memory alloy element (extending section) 11 formed of shape memory alloy. In case of FIG. 4, the four shape memory alloy elements 11 are provided. The shape memory alloy element 11 has memorized a length longer than the length D1 in a condition in which the satellite side structure 30 have installed as shown in FIG. 4. The shape memory alloy element 11 is attached to a preset position of the strap 2 with welding or a set of bolt and nut by compressing to the length D1 after the memory.

The heater 12 is provided for every shape memory alloy element 11 and heats the shape memory alloy element 11. The heater 12 is fixed on the PAF structure 20. It is desirable that the heater 12 is brought to contact with the shape memory alloy element 11 from the aspect of the heat efficiency. Also, the heater 12 may be contained in the shape memory alloy element 11. For example, by a method of winding a heating wire around the shape memory alloy element 11 and of pasting it to the alloy element, the heating wire may be formed as a unit together with the shape memory alloy element 11.

A control unit 13 controls the heater 12. For example, when the control unit 13 is a timer, the control unit 13 outputs a heating control signal to control the heater 12 for a predetermined time period at a preset time. The heater 12 heats the shape memory alloy element 11 to a predetermined temperature for the time period during which the heating control signal is received. Alternatively, when the control unit 13 is a microcomputer, the heating temperature, heating timing and the heating time of the heater 12 may be controlled based on a program. Moreover, the data of a sensor 15 (e.g. a strain sensor, or a temperature sensor) attached to the shape memory alloy element 11 may be used for the control. For example, by using the strain sensor, the heating may be ended based on the output of the strain sensor when the shape memory alloy element 11 is stretched to a predetermined length. For example, when the temperature sensor is used, the control unit 13 controls the heater based on the output of the temperature sensor such heat the shape memory alloy element 11 reaches a desired temperature. Another control unit installed in the rocket may be used as the control unit 13.

The coupling section 4 couples the end sections 2a of the strap 2 in the state that the PAF structure 20 and the satellite structure 30 are fastened by the strap 2 together with the plurality of blocks 3, to sustain the fastening by the clamp band 6. Or, the end sections 2a are separated and the fastening by the clamp band 6 is released.

The shape memory alloy element 11 will be described. The reason why the shape memory alloy is used is in that a rate of the alloy extending by the heating is very much larger than other materials. That is, the shape memory alloy stretches greatly in a small variation in temperature (for example, it stretches for about several %). As a result, there are effects that it is possible to suppress units and energy to cause the variation in temperature to a small amount, and that there are few consumption volumes of material. In addition, if the shape memory alloy returns to the memorized shape (the stretched shape) once, the shape memory alloy does not shrink even if the temperature lowers. Therefore, it is advantageous to installation in an object in which an energy amount is limited, like the launch vehicle, that the energy for heating can be more rarely suppressed. It should be noted that if a material has these characteristics, the material may be used instead of the shape memory alloy element 11.

It is necessary that the shape recovery temperature (the martensite transformation temperature) of the shape memory alloy element 11 is higher than the maximum temperature near the PAF structure 20 in the rocket. This is because the length control of the shape memory alloy element 11 becomes difficult when the shape recovery temperature is lower than the maximum temperature. For example, when the maximum temperature near the PAF structure 20 in the rocket is 80°C, the shape recovery temperature of the shape memory alloy element 11 is set to a temperature which exceeds 80°C. The shape recovery temperature can be freely set in a predetermined range based on a kind of the material and an alloy composition of the shape memory alloy.

Also, the shape memory alloy element 11 as a part of the strap 2 must fasten the PAF structure 20 and the satellite side structure 30 together with the blocks 3 and sustain the fastening condition. Therefore, it is necessary to have the strength sufficient to endure the load for fastening the PAF structure 20 and the satellite side structure 30 and sustaining the fastening condition. In an example of FIG. 4, the load when the strap 2 is fastened is about 20-30 kN.

As a desirable material for the shape memory alloy element 11 which has these characteristics, a Ti-Ni alloy based material is exemplified. The material includes a material in which other elements are added to the Ti-Ni alloy based material to improve a temperature characteristic and a strength characteristic. It should be noted that the material is not limited to the above example if the shape memory alloy has a transformation temperature above the maximum temperature near the PAF structure 20 in the rocket and has the strength sufficient to endure the load to fasten.

The shape memory alloy element 11 has a rectangular parallelepiped shape corresponding to the shape of the strap 2. For example, in the condition of FIG. 4, when the diameter φ₀ of the PAF structure 20 is 1000 mm, the shape memory alloy element 11 has the size of about D1×D2×D3 = 100mm×35mm×10mm. Here, the shape memory alloy element 11 has a curved shape along the circumference of the PAF structure 20, like the strap 2. It should be noted that the shape of the shape memory alloy element 11 is not limited to the above shape if the shape memory alloy element 11 can be coupled to another part of the strap 2 and has a predetermined strength. For example, the shape memory alloy element 11 may be of a column shape, and in such a case, the blocks 3 may be held in a portion except the shape memory alloy element.

When the condition that the shape memory alloy element 11 is longer than the length D1 is memorized, and the shape memory alloy element 11 is compressed to the length D1 and inserted, it is possible to return the shape memory alloy element 11 to the length longer than the length D1 by heating the shape memory alloy element 11 to a temperature equal to or higher than the shape recovery temperature by the heater 12. Thus, in the condition that the end sections 2a of the strap 2 are coupled, the circumference length of the strap 2 can be stretched. As a result, in the condition that the end sections 2a of the strap 2 are coupled, the fastening force of the clamp band 6 (the strap 2) can be weakened. It is desirable that the shape memory alloy element 11 is provided at a plurality of portions. In such a case, the fastening force can be gradually released in a step-by-step manner.

FIG. 6 is a plan view schematically showing the configuration of the coupling section 4 and its neighborhood in FIG. 4. The coupling section 4 is provided with a pin 4a and a driving section 4b. An opening 2b1 provided for one 2a1 of the end sections 2a of the strap 2 and an opening 2b2 provided for the other end section 2a2 are positioned to overlap, and the driving section 4b inserts the pin 4a in the overlapping openings 2b1 and 2b2. Thus, the coupling section 4 couples the end sections 2a of the strap 2. Also, by pulling out the pin 4a from the overlapping openings 2b1 and 2b2 by the driving section 4b, the coupling section 4 separates the end sections 2a of the strap 2. The coupling section 4 is exemplified by a pin plug using the shape memory alloy. In this case, because it is not necessary to use a pyrotechnic for the separation, the generation of the impact due to the pyrotechnic can be prevented.

It should be noted that when it is especially important to reduce the vibration of the satellite side structure 30 in the separation of the satellite side structure 30 which accompanies the release of the fastening force of the clamp band 6, a conventional pyrotechnic may be used for the coupling section 4. As mentioned later, this is because the vibration can be greatly reduced when the strap 2 having the shape memory alloy element 11 of the present invention is used and the fastening force is released.

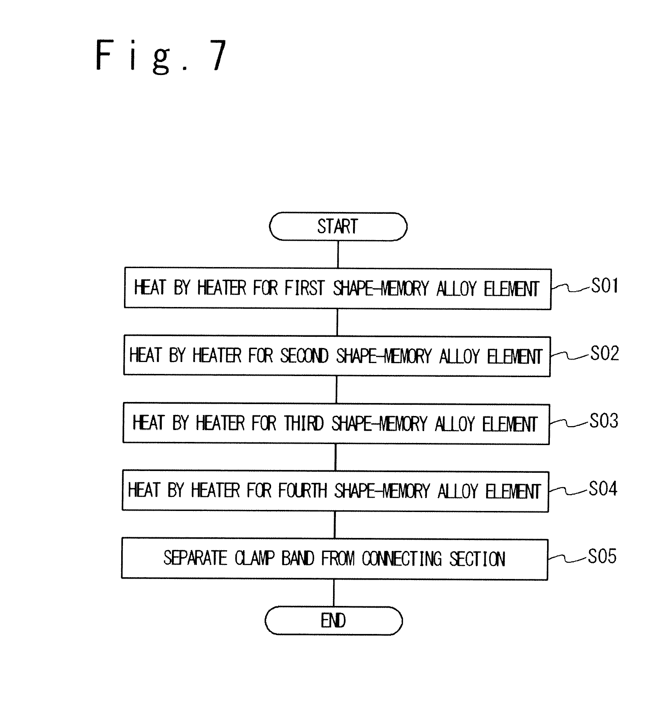

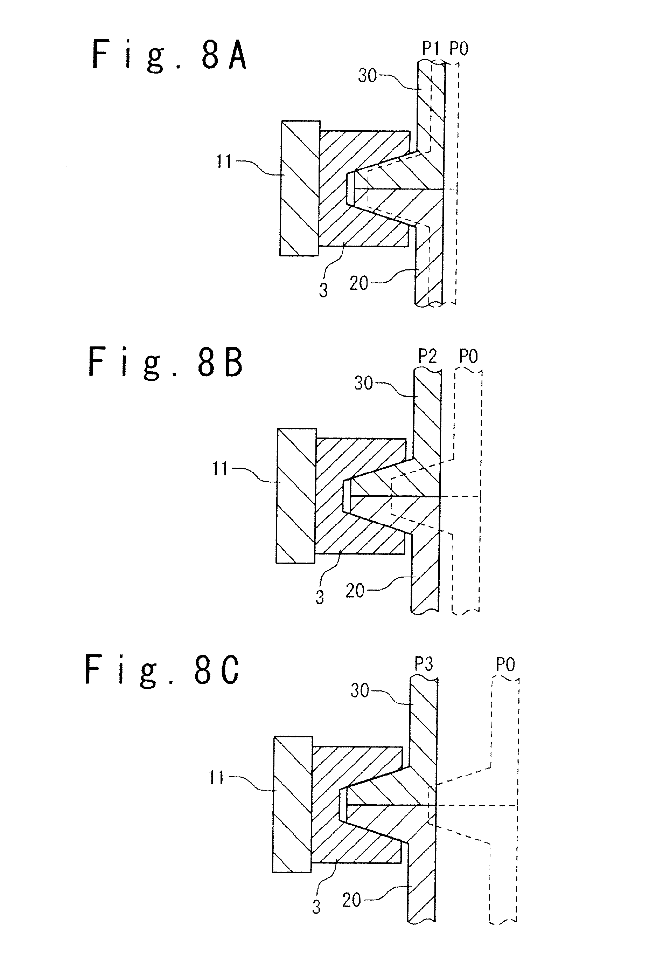

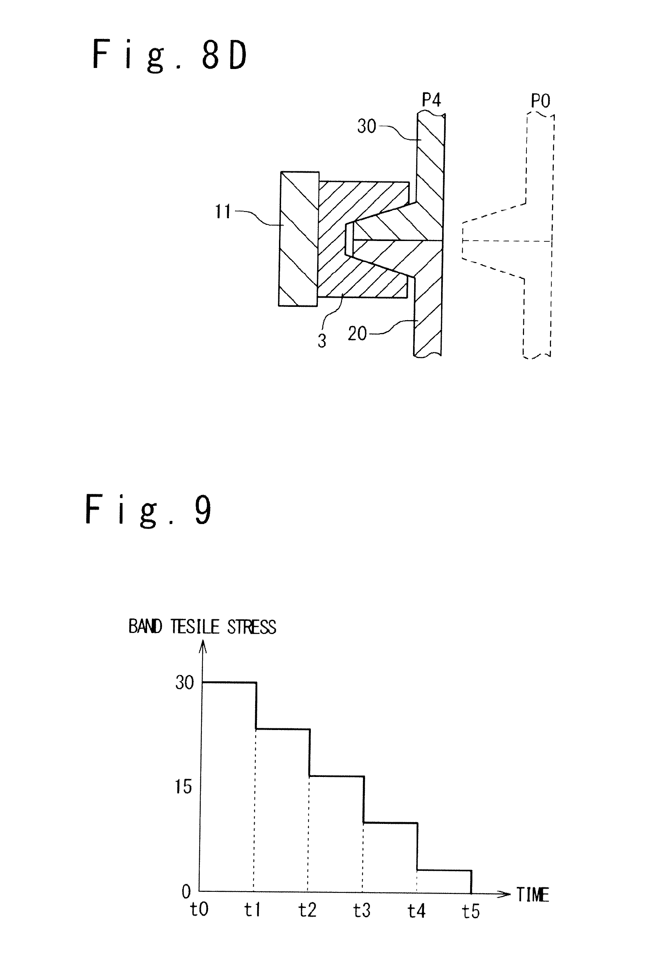

Next, an operation of the coupling and separating device and the coupling and separating system according to the embodiment of the present invention (the coupling and separating method) will be described. FIG. 7 is a flowchart showing an operation of the coupling and separating system according to the embodiment of the present invention. FIG. 8A to FIG. 8D are sectional views schematically showing the configuration of the clamp band along the line A-A in FIG. 4 in each of steps of FIG. 7. FIG. 9 is a graph showing an example of the tensile stress of the clamp band in each step of FIG. 7. Here, the clamp band 6 which contains the strap 2 provided with the four shape memory alloy elements 11 as shown in FIG. 4 will be described.

The satellite side structure 30 is installed in the coupling and separating system in advance. That is, the clamp band 6 couples the satellite side structure 30 and the PAF structure 20 (FIG. 4 and FIG. 5). The length which is longer than the length D1 is memorized in each shape memory alloy element 11 of the strap 2 in advance. The coupling section 4 is couples the end sections 2a of the strap 2 by use of the pin 4a (FIG. 6). This installation method is attained by engaging the blocks 3 which are made unitary with the strap 2, with the satellite side structure 30 and the PAF structure 20 after installing the satellite side structure 30 on the PAF structure 20, fastening the strap 2, and inserting the pin 4a into the openings 2b1 and 2b2 in the coupling section 4 when the openings 2b1 and 2b2 of the end sections 2a1 and 2a2 overlap. At this time, the clamp band 6 (the strap 2) is stretched longer than the natural length, and the tensile stress is, for example, about 30 kN (the tensile stress at the time t0 in FIG. 9).

The following separation sequence is performed to separate the satellite side structure 30 which is installed in the PAF structure 20 in this way.

First, the control unit 13 turns on the heater 12 for the first shape memory alloy element 11 when the satellite side structure 30 should be separated (Step S01). However, which of the shape memory alloy elements 11 is selected as the first one is optional. By turning on the heater 12 for the first shape memory alloy element 11, the first shape memory alloy element 11 is heated to a temperature above the shape recovery temperature. As a result, the circumferential length of the shape memory alloy element 11 in the strap 2 stretches to the previously memorized length from the length D1 in installation.

As a result, the tensile stress decreases slightly as shown at the time t1 in FIG. 9 (About 23 kN). At this time, the length of the strap 2 stretches for the length that the first shape memory alloy element 11 has stretched. That is, the diameter of the strap 2 extends slightly. Therefore, the fastening force of the clamp band 6 weakens. As a result, because a few blocks 3 can move outside slightly as shown in FIG. 8A, the satellite side structure 30 and the PAF structure 20 can move from a position P0 to a position P1. Thus, the stress of the satellite side structure 30 can be released.

When is the heater 12 turned off is optional. This is because the shape memory alloy element 11 is never shortened even if it the heating is stopped if the shape memory alloy element 11 is heated once to a temperature above the shape recovery temperature so that it stretches to the previously memorized length. However, in the environment in which power supply capacity is limited as in the rocket, it is desirable to prevent the unnecessary heating (the consumption of energy). Therefore, it is desirable that the heater is turned off as early as possible, when it is determined that the shape memory alloy element 11 has stretched to the predetermined length.

For example, for such a control, it is thought of that the control unit 13 turns off the heater when elapsing a predetermined time after the heater is turned on. In this case, the time until the shape memory alloy element 11 stretches is experimentally checked and the time is used as the above predetermined time. Or, when the temperature sensor is provided as the sensor 15, the heater may be turned off when elapsing the predetermined time after the temperature reaches a temperature above the shape recovery temperature. In this case, it is possible to consider that the shape memory alloy element 11 has stretched surely. Moreover, when the strain sensor is provided as the sensor 15, the heater 12 may be turned off when the detected strain exceeds a predetermined value (i.e. when the element 11 has stretched to the previously memorized length). In this case, it is possible to consider that the shape memory alloy element 11 has stretched surely. When the heater 12 for the second shape memory alloy element 11 to the heater 12 the fourth shape memory alloy element 11 are turned off is same as in the first shape memory alloy element 11. Therefore, the description is omitted. Next, the control unit 13 turns on the heater 12 for the second shape memory alloy element 11 at the time when the first shape memory alloy element 11 has stretched to the predetermined length (Step S02). However, which of the shape memory alloy elements 11 is selected as the second one is optional. For example, the shape memory alloy element 11 at the opposing position may be selected as the second shape memory alloy elements 11 or the shape memory alloy element 11 in the neighborhood in a clockwise direction or in a counterclockwise direction may be selected. When the heater 12 for the second shape memory alloy element 11 is turned on, the second shape memory alloy element 11 is heated to a temperature above the shape recovery temperature. As a result, the circumferential length of the second shape memory alloy element 11 in the strap 2 stretches to the previously memorized length from the length D1 in the installation.

As a result, the tensile stress decreases slightly as shown at the time t2 in FIG. 9 (about 16 kN). At this time, the length of the strap 2 further stretches for the length that the second shape memory alloy element 11 has stretched. That is, the diameter of the strap 2 stretches slightly. Therefore, the fastening force of the clamp band 6 further weakens. As a result, because the blocks 3 can move outside as shown in FIG. 8B, the satellite side structure 30 and the PAF structure 20 can further spread from the position P1 to a position P2 in an outer direction. Thus, the tensile stress of the satellite side structure 30 can be further released.

Next, the control unit 13 turns on the heater 12 for the third shape memory alloy element 11 at the time when the second shape memory alloy element 11 has stretched to the predetermined length (Step S03). By turning one the heater 12 for the third shape memory alloy element 11, the third shape memory alloy element 11 is heated to a temperature above the shape recovery temperature. As a result, the circumferential length of the third shape memory alloy element 11 in the strap 2 stretches to the previously memorized length from the length D1 in the installation.

As a result, the tensile stress decreases slightly as shown at the time t3 in FIG. 9 (about 9 kN). At this time, the length of the strap 2 stretches for the length that the third shape memory alloy element 11 has stretched. That is, the diameter of the strap 2 spreads slightly. Therefore, the fastening force of the clamp band 6 further weakens. As a result, because the blocks 3 can move outside as shown in FIG. 8C, the satellite side structure 30 and the PAF structure 20 can further spread from the position P2 to a position P3 in an outer direction. Thus, the stress of the satellite side structure 30 can be further released.

Next, the control unit 13 turns on the heater 12 for the fourth shape memory alloy element 11 at the time when the third shape memory alloy element 11 has stretched for a predetermined length (Step S04). By turning on the heater 12 for the fourth shape memory alloy element 11, the fourth shape memory alloy element 11 is heated to a temperature above the shape recovery temperature. As a result, the circumferential length of the fourth shape memory alloy element 11 in the strap 2 stretches to the previously memorized length from the length D1 in the installation.

As a result, the tensile stress decreases slightly as shown at the time t4 in FIG. 9 (about 1 kN). At this time, the strap 2 stretches for the length that the fourth shape memory alloy element 11 has stretched. That is, the diameter of the strap 2 spreads slightly. Therefore, the fastening force of the clamp band 6 further weakens. As a result, because the blocks 3 can move outside as shown in FIG. 8D, the satellite side structure 30 and the PAF structure 20 can further expand from the position P3 to a position P4 in the outer direction. Thus, the stress of the satellite side structure 30 can be further released. For example, a time period from the time t0 to the time t4 is a few tens of seconds to a few hundreds of seconds.

At this step, the tensile stress of the strap 2 is reduced to, for example, 1/10 or less of the original value. That is, the stress (the strain energy) of the satellite side structure 30 is also reduced to 1/10 or less of the original value in the same way. Next, the control unit 13 turns on the coupling section 4. The coupling section 4 pulls out the pin 4a from the openings 2b of the end sections 2a of the strap 2 (Step S05). Thus, the end sections 2a of the strap 2 are separated, and the tensile stress passes away (about 0 kN) as shown at the time t5 in FIG. 9 and the clamp band 6 is pulled outside by the springs 5. As a result, the strap 2 and the blocks 3 leave from the fitting portions of the satellite side structure 30 and the PAF structure 20. In this way, the satellite side structure 30 and the PAF structure 20 is separated. Then, the control unit 13 turns off the coupling section 4.

Through the operation of the above-mentioned coupling and separating system, the satellite is separated. However, the above separation process is only exemplified. The value and decrease of the fastening force (tensile stress), the number of times of loosing (the number of shape memory alloy elements), and the time of loosing the fastening force (for the satellite separation) is possible to design appropriately according to the satellite and the rocket to be installed and so on.

It should be noted that the order of stretching the shape memory alloy elements 11 can be optionally selected. For example, they may be selected in a sash-like manner as in fixation of a circular flange with a plurality of bolts, or in a clockwise direction or a counterclockwise direction from a concerned position. Also, a decrease rate of the tensile stress can be optionally adjusted based on the number of shape memory alloy elements 11 and the lengths of them. For example, if the length of the shape memory alloy element 11 is made long, the decrease rate of the tensile stress of the shape memory alloy element 11 can be made large. Also, if the number of shape memory alloy elements 11 is increased, the tensile stress can be continuously decreased by dividing into small steps.

In the present embodiment, a mechanism is provided which looses the fastening force applied to the fitting section by the clamp band 6 in a step-by-step manner. That is, the shape memory alloy element 11 is provided in at least one position (desirably, plurality of positions) of the full circumference of the strap 2, and the shape memory alloy element at each position is heated to increase the length of the shape memory alloy element in the circumferential direction. When the shape memory alloy elements 11 are provided at the plurality of positions, they are heated at different timings to stretch the circumferential length. Thus, because the strap 2 (the clamp band 6) can stretch in a step-by-step manner, the fastening force can be loosed in the step-by-step manner. The decrease of tensile stress of the clamp band in case of the stretch of the shape memory alloy element 11 is reduced to an inverse number of the number of shape memory alloy elements 11 (FIG. 9), compared with the release of the tensile stress at a time. Thus, the impact decreases proportionally. As a result, the impact due to release of the fastening force can be greatly reduced by loosing the fastening force in the step-by-step manner.

Also, in the present embodiment, a pyrotechnic is not used for the coupling section 4, and a mechanism which performs the coupling and separation by the insertion and pulling-out of the pin 4a is used without using gunpowder. Thus, the impact due to the pyrotechnic can be eased. Because not using the pyrotechnic, the operation constraints pass away. In addition, because the reuse is possible, it is possible to examine an actual article before actual use.

Moreover, in the present embodiment, the structures of the satellite side structure 30 and the PAF structure 20, i.e. the interface between the satellite and the rocket can be made same as a conventional one. Therefore, the compatibility with other rockets can be maintained by seeing from the satellite.

The present invention is not limited to the above embodiments, and it would be apparent to a skilled person in the art that various modifications of the embodiments are possible appropriately in a range of the technical scope of the present invention.

## Claims

1. A coupling and separating device comprising:
a block which engages an installation member of a launch vehicle and a structure installed on said installation member;
a clamp band which has a strap which holds said block from outside; and
a coupling section which couples or separates end sections of said strap,
wherein said strap comprises shape memory alloy and comprises a stretching section which stretches through heating.

2. The coupling and separating device according to claim 1, wherein said strap comprises a plurality of stretching sections which contain said stretching section.

3. The coupling and separating device according to claim 1 or 2, wherein said shape memory alloy comprises TiNi.

4. The coupling and separating device according to any of claims 1 to 3, wherein said end sections of said strap have openings, respectively,
wherein said coupling section comprises:
a pin; and
a driving unit which insets and pulls out said pin into and from said openings, and
wherein said end sections of said strap are coupled by inserting said pin into said openings and said end sections of said strap are separated by pulling out said pin from said openings.

5. The coupling and separating device according to any of claims 1 to 4, further comprising:
a heating section which heats said stretching section.

6. A coupling and separating system comprising:
an installation member which is installed in a launch vehicle and on which a structure is installed;
said coupling and separating device according to any of claims 1 to 4, which couples and separates said structure with and from said installation member; and
a heating unit which heats said stretching section of said coupling and separating device.

7. The coupling and separating system according to claim 6, further comprising:
a first sensor which detects a temperature of said stretching section,
wherein said heating unit stops the heating based on a detection result of said first sensor.

8. The coupling and separating system according to claim 6, further comprising:
a second sensor which detects a length of said stretching section,
wherein said heating unit stops the heating based on a detection result of said second sensor.

9. A coupling and separating method which uses a coupling and separating system which couples or separates a structure with or from a launch vehicle, wherein said coupling and separating system comprises:
an installation member which is installed in a launch vehicle and on which said structure is installed;
a coupling and separating device which couples or separates said structure with or from said installation member; and
a heating unit,
wherein said coupling and separating device comprises:
a block which engages said installation member of said launch vehicle and said structure installed in said installation member;
a strap which holds said block from outside; and
a coupling section which couples or separates end sections of said strap,
wherein said strap comprises shape memory alloy and comprises a stretching section which stretches through heating,
wherein said coupling and separating method comprises:
heating said stretching section of said strap by said heating unit to stretch said stretching section, wherein said end sections are coupled in said coupling section; and
separating said end sections in said coupling section after the stretch.

10. The coupling and separating method according to claim 9, wherein said strap comprises a plurality of stretching sections which contain said stretching section,
wherein said heating comprises:
heating said plurality of stretching sections one by one at different timings by said heating unit.

11. The coupling and separating method according to claim 10, wherein said heating of said plurality of stretching sections one by one comprises:
heating one of said plurality of stretching sections by said heating unit; and
heating another of said plurality of stretching sections which has not been heated, after the heating of said one stretching section.
